# EUROPEAN PATENT APPLICATION

(11) **EP 2 216 560 A1**
(43) Date of publication of application: **11.08.2010**
(21) Application number: 07859712.7
(22) Date of filing: 05.12.2007
(51) Int. Cl.: F16D 3/205

(54) **TRIPOD-TYPE CONSTANT VELOCITY JOINT**

(71) Applicant: JTEKT Corporation, Osaka-shi Osaka 542-8502 (JP)
(72) Inventor: WAKAMATSU, Minoru, Osaka-shi Osaka 542-8502 (JP)
(74) Representative: TBK-Patent
(86) International application number: PCT/JP2007/073484
(87) International publication number: WO 2009/072195

(57) **Abstract**

To provide a tripod-shaped constant-velocity universal joint which makes downsizing feasible while reducing induced thrust force.

A shaft-axis-wise width "bx" of the tripod-shaft portions 22 of a tripod-shaped constant-velocity universal joint (i.e., a width of the tripod-shaft portions 22 in a case where they are viewed from the torque transmission direction) is formed smaller as it goes from the root side to the leading-end side in the torque transmission region.

## Description

### TECHNICAL FIELD

The present invention is one which relates to a tripod-shaped constant-velocity universal joint.

### BACKGROUND ART

Conventional tripod-shaft portions have been formed as a cylindrically columnar configuration. When transmitting rotary force in cases where the joint angle is not zero degree in this tripod-shaped constant velocity universal joint, the rollers move reciprocally along the guide grooves of the outer race while rotating about the axis of the tripod-shaft portions and moving reciprocally in the axial direction. On this occasion, the rollers are always located on an identical axis with respect to the tripod-shaft portions, because the tripod-shaft portions have a cylindrically columnar shape. Consequently, slippage occurs between the rollers and the guide grooves; as a result, induced thrust force occurs in the joint-axis direction. This induced thrust force becomes the occurrence cause of vehicle-body vibrations and noises, and have an influence on vehicle's NVH performance.

Hence, in order to reduce the induced thrust force, those being disclosed in Japanese Unexamined Patent Publication (KOKAI) Gazette No. 3-172,619 and Japanese Unexamined Patent Publication (KOKAI) Gazette No. 2000-320,563are available, for instance. A tripod-shaped constant-velocity universal joint being disclosed in Japanese Unexamined Patent Publication(KOKAI)Gazette No.3-172,619 has the tripod-shaft portions whose outer-peripheral-surface configuration is formed as a spherical shape. Since the rollers become swingable with respect to the tripod-shaft portions by means of this setting, it is said that no slippage occurs between the rollers and the guide grooves.

Moreover,atripod-shaped constant-velocity universal joint being disclosed in Japanese Unexamined Patent Publication (KOKAI) Gazette No. 2000-320,563 has the tripod-shaft portions whose axially-orthogonal cross-sectional configuration is formed always as an identical elliptical column. This elliptical column is such a configuration that a clearance is formed between the tripod-shaft portions and the rollers in the intermediate-shaft-axis direction, and that the tripod-shaft portions and the rollers make contact with each other in the torque transmission direction. Therefore, it is possible for the rollers to operate so that they incline with respect to the tripod-shaft portions when being viewed from the torque transmission direction.

### DISCLOSURE OF THE INVENTION

### Assignment to be Solved by the Invention

Here, in the tripod-shaped constant-velocity universal joint being disclosed in Japanese Unexamined Patent Publication (KOKAI) Gazette No. 3-172,619, since the root of the tripod-shaft portions is formed as a constricted configuration, the section modulus at the root becomes smaller. Moreover, in the tripod-shaped constant-velocity universal joint being disclosed in Japanese Unexamined Patent Publication (KOKAI) Gazette No. 2000-320,563, since the tripod-shaft portions have an axially-orthogonal cross-sectional configuration that is formed always as an identical elliptical column, the section modulus at the root of the tripod-shaft portions becomes smaller. Consequently, in any one of the aforementioned cases, it is needed to jumboize the cross-sectional shape of the tripod-shaft portions in order to secure strength for the tripod-shaft portions. Therefore, the contour of the tripod-shaped constant-velocity universal joints jumboizes.

The present invention is one which has been done in view of such circumstances, and it is an object to provide a tripod-shaped constant-velocity universal joint which makes downsizing feasible while reducing induced thrust force.

### Means for Solving the Assignment

Hence, the present inventor studied earnestly in order to solve this assignment; as a result of his repeated trial and error, he thought of the following for reducing induced thrust force: the needed swinging angle of rollers with respect to tripod-shaft portions differs depending on the relative position of the rollers with respect to the tripod-shaft portions; and then he arrived at completing the present invention.

First of all, the needed swinging angle of rollers with respect to tripod-shaft portions will be explained, needed swinging angle which is for reducing induced thrust force. In the case where the joint angle is zero degree, the relative position of the rollers with respect to the tripod-shaft portions is always constant. The position of the rollers in this case is, of the torque transmission region of the tripod-shaft portions, present on the most root side, namely, on the boss-portion side.

Here, the torque transmission region refers to an axial-wise region of the tripod-shaft portions in which, of the outer peripheral surface of the tripod-shapedportions, parts that contribute to torque transmission are included. Parts that contribute to torque transmission refer to parts which, of the tripod-shaft portions, are able to contact the rollers when torque transmission is carried out between the tripod-shaft portions and the rollers.

On the other hand, in the case where the joint angle is not zero degree, the rollers reciprocate with respect to the tripod-shaft portions in the tripod-axial direction. The tripod-axial direction refers to an axial direction in which the tripod-shaft portions extend from the boss portion to a diametrically outside. And, in the case where the rollers are located, of the tripod-shaped portions, on the most root side (or boss-portion side), it is favorable for reducing induced thrust force that the rollers' roller rotation axis can coincide with the tripod-shaft portions' tripod axis. The rollers' position with respect to the tripod-shaft portions in this instance coincides with the rollers' position with respect to the tripod-shaft portions in the case where the joint angle is zero degree.

Moreover, in the case where the j oint angle is not zero degree, but in the case where the rollers are located, of the tripod-shaft portions, on the leading-end side (or on the opposite side to the boss portion), it is favorable for reducing induced thrust force that the rollers can be in an inclined state with respect to the tripod-shaft portions. It is favorable that the more the rollers go, of the tripod-shaped portions, to the leading-end side the greater this inclination angle can become.

That is, it is favorable to make the rollers' roller rotation axis coincide with the tripod-shaft portions' tripod axis in the case where the rollers are located, of the tripod-shaft portions, on the root side; and to make the rollers' inclination angle with respect to the tripod-shaft portions greater as the rollers go, of the tripod-shaft portions, more toward the leading-end side.

Hence, a tripod-shaped constant-velocity universal joint according to the present invention is adapted as follows. Specifically, a tripod-shaped constant-velocity universal joint according to the present invention is equipped with an outer race, a tripod, and rollers. The outer race is formed as a cup configuration whose inner peripheral surface is provided with three guide grooves that extend in the rotary axis (hereinafter being referred to as "outer-race rotary axis") direction. The tripod is equipped with a boss portion being formed as a cylindrical configuration, and three tripod-shaft portions being disposed extendedly from the boss portion to a diametrically outer side of the shaft axis respectively and being inserted into each of the guide grooves. The rollers are formed as an annular configuration, are supported to each of the tripod-shaft portions rotatably around each of the tripod-shaft portions, and engaging with the guide grooves rollably. And, a shaft-axis-wise width of the tripod-shaft portions is formed smaller as it goes from the root side to the leading-end side in a torque transmission region of the tripod-shaft portions. And, Here, a "shaft" is a member that is coupled to the boss portion. The "shaft axis" means the shaft's axial direction, and is an axis that coincides with the boss portion's axial direction.

That is, in accordance with the tripod-shaped constant-velocity universal joint according to the present invention, a shaft-axis-wise width of the tripod-shaft portions is formed smaller as it goes from the root side to the leading-end side in the torque transmission direction. Here, an inside diameter of the rollers is a shaft-axis-wise width or more at the root of the tripod-shaft portions at least. If such is the case, a clearance is formed between the rollers and the tripod-shaft portions at the leading end of the tripod-shaft portions when being viewed from the torque transmission direction. Therefore, it is possible for the rollers to swing on the leading-end side of the tripod-shaft portions when being viewed from the torque transmission direction. Further, it is possible to make the swinging angle of the rollers greater with respect to the tripod-shaft portions when being viewed from the torque transmission direction. By means of this setting, it is possible to change the swinging angle of the rollers with respect to the tripod-shaft portions so as to reduce induced thrust force.

Further, in accordance with the tripod-shaped constant-velocity universal j oint according to the present invention, a shaft-axis-wise width of the tripod-shaft portions is formed smaller as it goes to the leading-end side. That is, it means that it is possible to make the shaft-axis-wise width of the tripod-shaft portions greater at the root of the tripod-shaft portions. For example, it is even possible to make no clearance occur between the rollers and the tripod-shaft portions at and around the root of the tripod-shaft portions. Therefore, it is possible to make a section modulus at the root of the tripod-shaft portions greater. As a result, it is possible to downsize a contour of the tripod-shaped constant-velocity universal joint because it is possible to enhance the strength of the tripod-shaft portions.

For example, a comparison is made with the case of tripod-shaft portions that are formed of an elliptical column as set forth in Japanese Unexamined Patent Publication (KOKAI) Gazette No. 2000-320,563. For instance, a configuration at the leading end of the tripod-shaft portions according to the present invention is adapted into an elliptic shape of the tripod-shaft portions that are set forth in Japanese Unexamined Patent Publication (KOKAI) Gazette No. 2000-320,563. In this case, a torque-transmission-wise width at the root of the tripod-shaft portions according to the present invention becomes greater than the minor diameter of said ellipse. Consequently, it is possible to make the section modulus at the root of the tripod-shaft portions according to the present invention greater than the section modulus at the root of the tripod-shaft portions that are set forth in Japanese Unexamined Patent Publication (KOKAI) Gazette No. 2000-320,563. Therefore, it is possible to downsize a contour of the tripod-shaped constant-velocity universal joint compared with the case of the tripod-shaft portions that are formed of an elliptical column.

Moreover, it is allowable that a torque-transmission-wise width of the tripod-shaft portions can be formed smaller as it goes from the root side to the leading-end side in the torque transmission region when a direction that crosses the shaft axis and the tripod axis of the tripod-shaft portions orthogonally is defined as a torque transmission direction. In this case, an inside diameter of the rollers is a torque-transmission-wise width or more at least at the root of the tripod-shaft portions. If such is the case, a clearance is formed between the rollers and the tripod-shaft portions at the leading end of the tripod-shaft portions when being viewed from the shaft-axis direction. Therefore, it is possible for the rollers to swing on the leading-end side of the tripod-shaft portions when being viewed from the shaft-axis direction. Further, it is possible to make the swinging angle of the rollers greater with respect to the tripod-shaft portions when being viewed from the shaft-axis direction. By means of this setting, the greater degree of freedom in swinging the rollers enjoy the more they go toward the leading-end side of the tripod-shaft portions. As a result, it is possible to reduce the occurrence of induced thrust force furthermore.

Note that it is even allowable that the torque-transmission-wise width of the tripod-shaft portions can be formed so as to be identical over the span from the root side to the leading-end side in the torque transmission region. Even in this case, it is possible to reduce the occurrence of induced thrust force sufficiently, because a swinging angle that is necessary for the rollers is secured with respect to the tripod-shaft portions. In this case, however, there is such a fear that induced thrust force might become greater, because the degree of freedom in swinging is small compared with the case where the torque-transmission-wise width is formed smaller as it goes from the root side to the leading-end side.

Here, in order to reduce induced thrust force and the like, it is necessary for the rollers to swing with respect to the tripod-shaft portions as described above when being viewed from the torque transmission direction. On the other hand, it is not necessary for the rollers to swing so much with respect to the tripod-shaft portions when being viewed from the shaft-axis direction. For example, in the tripod-shaped constant-velocity universal joint being set forth in Japanese Unexamined Patent Publication (KOKAI) Gazette No. 3-172,619, the rollers can swing greatly with respect to the tripod-shaft portions even when being viewed from any of the directions, the shaft-axis direction and the torque transmission direction. However, because of the setting that the rollers swing with respect to the tripod-shaft portions when being viewed from the shaft-axis direction as well, there is such a fear that the opposite end faces of the rollers make contact with the guide grooves. Slippage occurs between the rollers and the guide grooves because of this contact; as a result, induced thrust force occurs.

Hence, it is allowable that the shaft-axis-wise width at the leading end of the tripod-shaft portions can be formed smaller than the torque-transmission-wise width at the leading end of the tripod-shaft portions. By means of this setting, it is possible to make, at the leading end of the tripod-shaft portions, a swingable angle of the rollers with respect to the tripod-shaft portions in the case of being viewed from the shaft-axis direction smaller than a swingable angle of the rollers with respect to the tripod-shaft portions in the case of being viewed from the torque transmission direction. Therefore, it is possible to reduce the augmentation of induced thrust force that is brought about by the contact of the opposite end faces of the rollers with the guide grooves, contact which results from the swing of the rollers with respect to the tripod-shaft portions in the case of being viewed from the shaft-axis direction, while securing a swinging angle, which is necessary for the rollers with respect to the tripod-shaft portions in the case of being viewed from the torque transmission direction, in order to reduce induced thrust force.

Moreover, it is allowable to set a ratio of the shaft-axis-wise width at the leading end of the tripod-shaft portions with respect to the shaft-axis-wise width at the root of the tripod-shaft portions so as to be 0.25-0.8 in the torque transmission direction. Preferably, said ratio can be 0.45-0.65. More preferably, said ratio can be 0.55. By means of this setting, the rollers can swing sufficiently with respect to the tripod-shaft portions when the rollers are located on the leading-end side of the tripod-shaft portions. Therefore, it is possible to reduce induced thrust force securely.

Moreover, it is allowable to set a ratio of the torque-transmission-wise width at the leading end of the tripod-shaft portions with respect to the torque-transmission-wise width at the root of the tripod-shaft portions so as to be 0.7-1.0 in the torque transmission direction Preferably, said ratio can be 0.85-0.98. More preferably, said ratio can be 0.95. By means of this setting, it is possible to reduce induced thrust force securely.

Moreover, it is allowable that an axially-orthogonal cross-sectional shape of the tripod-shaft portions can be formed as an elliptical configuration; and when the torque-transmission-wise width of the tripod-shaft portions is defined as "a," and the shaft-axis-wise width of the tripod-shaft portions is defined as "b," an ellipticalness "b/a" at the root of the tripod-shaft portions can be 0.70-1.30; and another ellipticalness "b/a" at the leading end of the tripod-shaft portions can 0.35-0.80. Preferably, the ellipticalness "b/a" at the root can be 0.95-1.05, and the other ellipticalness "b/a" at the leading end can be 0.45-0.65. By means of this setting, it is possible to reduce induced thrust force securely.

Moreover, it is allowable that a shaft-axis-wise width of the tripod-shaft portions can be equal to or less than a torque-transmission-wise width of the tripod-shaft portions at an identical tripod-axis-wise position in the torque transmission region. By means of this setting, a swingable angle of the rollers with respect to the tripod-shaft portions when being viewed from the shaft-axis-wise direction becomes smaller than a swingable angle of the rollers with respect to the tripod-shaft portions when being viewed from the torque transmission direction at whatever positions in the tripod-axis-wise direction. Therefore, it is possible at any positions in the tripod-axis-wise direction to reduce the augmentation of induced thrust force that is brought about by the contact of the opposite end faces of the rollers with the guide grooves, contact which results from the swing of the rollers with respect to the tripod-shaft portions in the case of being viewed from the shaft-axis direction, while securing a swinging angle, which is necessary for the rollers with respect to the tripod-shaft portions in the case of being viewed from the torque transmission direction, in order to reduce induced thrust force.

Moreover, it is allowable that an axially-orthogonal cross-sectional shape at the root of the tripod-shaft portions can be formed as a circle. By means of this setting, it becomes feasible to make a section modulus at the root of the tripod-shaft portions greater. Therefore, it is possible to downsize a contour of the tripod-shaped constant-velocity universal joint furthermore, because it is possible to make the tripod-shaft portions greater in strength. In particular, the section modulus is in the state of being maximized when the diameter of this axially-orthogonal cross-sectional shape is virtually equal to the inside diameter of the rollers.

### Effect of the Invention

In accordance with the tripod-shaped constant-velocity universal joint according to the present invention, downsizing becomes feasible while reducing induced thrust force.

### BRIEF DESCRIPTION OF THE DRAWING

Fig. 1 illustrates a diagram of a tripod-shaped constant-velocity universal joint that is viewed in the shaft-axis direction;
Fig. 2 illustrates a diagram of the tripod-shaped constant-velocity universal joint that is viewed in the torque transmission direction;
Fig. 3 is a diagram in which a tripod 20 is observed from the leading-end side of one of its tripod-shaft portions 22;
Fig. 4 illustrates measurement results of a first experiment;
Fig. 5 illustrates measurement results of a second experiment; and
Fig. 6 illustrates measurement results of a third experiment.

### Explanation on Reference Numerals

:
- 10:: Outer Race; 11: One of Guide Grooves;
- 20:: Tripod; 21: Boss Portion; 22: One of Tripod-shaft Portions;
- 30:: One of Rollers; 31: Inner Roller; 32: Outer Roller;
- 33:: One of Needles; and 34: Snap Rings

### Best Mode for Carrying Out the Invention

Next, the present invention will be explained in more detail while naming embodiment modes. Here, a tripod-shaped constant-velocity universal joint according to one of the present embodiment modes will be explained while naming a case where it is used for connecting the power transmission shafts of vehicle as an example. Concretely speaking, it is the case where it is used for the connector part between a shaft portion, which is connected to a differential gear, and an intermediate shaft.

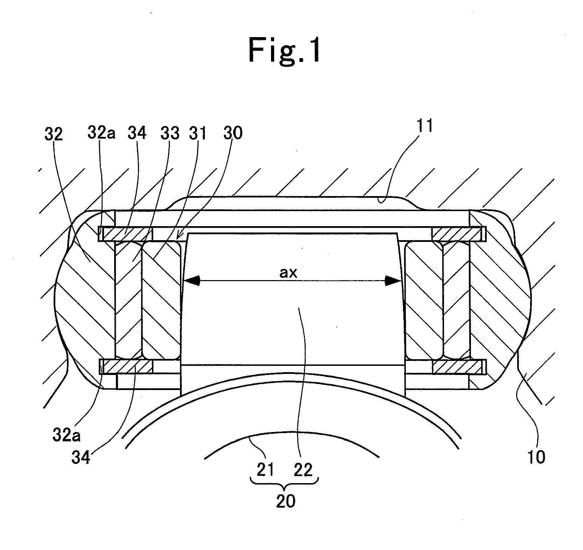

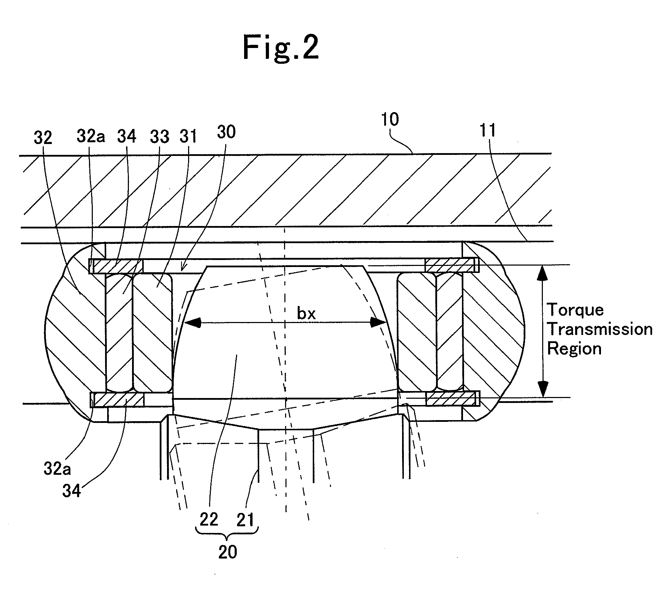

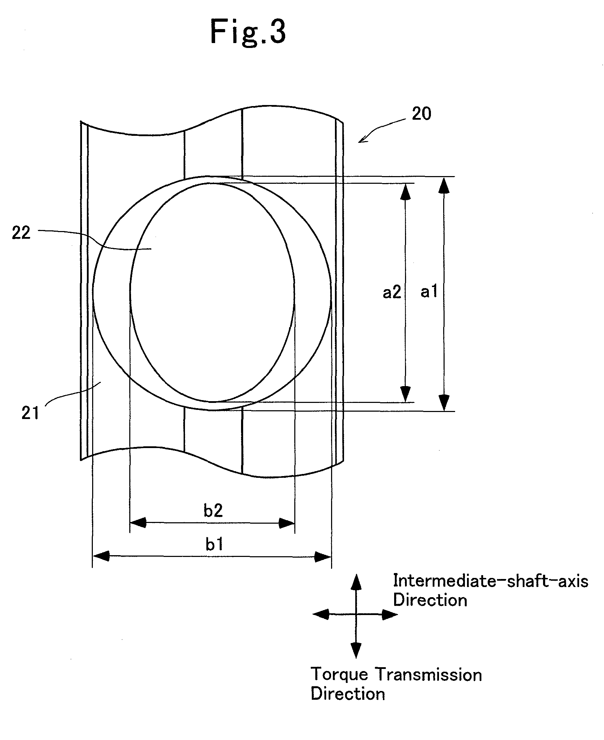

This tripod-shaped constant-velocity universal joint will be explained with reference to Fig. 1 through Fig. 3. Fig. 1 illustrates an intermediate-shaft-diameter-wise cross-sectional diagram of the tripod-shaped constant-velocity universal joint (hereinafter, being referred to as a "diagram that is viewed in the shaft-axis direction"). Fig. 2 illustrates a shaft-axis-wise cross-sectional diagram of the tripod-shaped constant-velocity universal joint (hereinafter, being referred to as a "diagram that is viewed in the torque transmission direction"). Fig. 3 is a diagram in which the tripod 20 is observed from the leading-end side of one of the tripod-shaft portions 22. Specifically, Fig. 3 is a diagram in which the tripod 20 is observed from the upper side in Fig. 2.

This tripod-shaped constant-velocity universal joint is constituted of an outer race 10 to be connected to an opposite-side shaft (not shown), a tripod 20 to be connected to the other opposite-side intermediate shaft (not shown), and rollers 30 that intervene between the outer race 10 and the tripod 20.

The outer race 10 is formed in a cup shape (or a bottomed cylindrical shape), and is connected to the opposite-side shaft on the cup-bottomed outer side. And, in the inner peripheral surface of the cup-shaped section of the outer race 10, a guide groove 11, which extends in the outer-race rotational axis direction (i.e., the front/rear direction in Fig. 1, or the right/left direction in Fig. 2), is formed in a quantity of three at equal intervals. Note that, in Fig. 1 and Fig. 2, only one of the guide grooves 11 is shown.

The tripod 20 is put in place inside the cup-shaped section of the outer race 10. This tripod 20 is equipped with a boss portion 21, and three tripod-shaft portions 22. The boss portion 21 comprises a circular cylindrical configuration, and the inner-periphery side of the boss portion 21 is connected to an end of the other opposite-side intermediate shaft.

The respective tripod-shaft portions 22 are formed so that they are present on the outer-peripheral side of the boss portion 21 in a manner extending toward the diametric-outer side of the shaft axis of the intermediate shaft (i.e., being equivalent to the axial center of the tripod 2, and to the axial center of the boss portion 21), and are formed at equal intervals in the circumferential direction of the boss portion 21. The tripod-shaft portions 22 comprise a circular columnar configuration with an elliptical cross-sectional shape (including a circular cross-sectional shape) . To be specific, as illustrated in Fig. 1 and Fig. 3, a torque-transmission-wise width "ax" of the tripod-shaft portions 22 is formed smaller slightly as it goes from the root side of the tripod-shaft portions 22 to the leading-end side in the torque transmission region. Specifically, a torque-transmission-wise width "a2" at the leading end of the tripod-shaft portions 22 is formed smaller than a torque-transmission-wise width "a1" at the root of the tripod-shaft portions 22. Note that, though being detailed later,it is allowable that a torque-transmission-wise width "ax" of the tripod-shaft portions 22 can be set to be constant entirely.

Moreover, as illustrated in Fig. 2 and Fig. 3, a shaft-axis-wise width "bx" of the tripod-shaft portions 22 is formed smaller as it goes from the root side of the tripod-shaft portions 22 to the leading-end side in the torque transmission region. Specifically, a shaft-axis-wise width "b2" at the leading end of the tripod-shaft portions 22 is formed smaller than a shaft-axis-wise width "b1" at the root of the tripod-shaft portions 22. And, the shaft-axis-wise width "b2" at the leading end of the tripod-shaft portions 22 is formed smaller than the torque-transmission-wise width "a2" at the aforesaid leading end.

Here, the "torque transmission region" is a region being shown in Fig. 2, and an axial region of the tripod-shaft portions 22 in which, of the outer peripheral surface of the tripod-shaft portions 22, parts that contribute to torque transmission are involved. The "parts that contribute to torque transmission" are parts, of the parts of the tripod-shaft portions 22, which can come in contact with an inner roller 31 of the rollers 30 when torque transmission is carried out between the tripod-shaft portions 22 and the rollers 30. Those parts that contribute to torque transmission are the right and left end sides of the tripod-shaft portions 22 in Fig. 1. Note that the detailed shape of the tripod-shaft portions 22 will be described later.

The rollers 30 comprise an annular shape. Each of the rollers 30 is supported pivotally onto the outer peripheral side of each of the tripod-shaft portions 22 so as to be capable of rotating about the tripod axis and swinging in the tripod-axis direction. Further, the rollers 30 are capable of swinging with respect to the tripod-shaft portions 22. Furthermore, the rollers 30 are put in place rollably in the guide grooves 11. These rollers 30 are constituted of an inner roller 31, an outer roller 32, a plurality of needles 33, and two snap rings 34, 34, respectively.

The inner roller 31 comprises a circular cylindrical configuration, and is supported pivotally to the leading end 221 of each of the tripod-shaft portions 22 so as to be capable of rotating, sliding and swinging. The circular-cylindrically-shaped inner surface of the inner roller 31 makes contact with one of the tripod-shaped portions 22. And, a cylindrical length of the inner roller 31 is slightly smaller than a length of the torque transmission region in the tripod-shaft portions 22. An inside diameter of this inner roller 31 is made slightly greater than a major-axis diameter at the root of the tripod-shaft portions 22.

Here, the shaft-axis-wise width "bx" of the tripod-shaft portions 22 is formed smaller as it goes from the root side to the leading-end side. Therefore, in a case where the inner roller 31 is located at the root of the tripod-shaft portions 22, the rollers 30 can hardly swing with respect to the tripod-shaft portions 22 in the torque-transmission-wise view (i,e., Fig. 2). On the contrary, in a case where the inner roller 31 is located at the leading end of the tripod-shaft portions 22, the rollers 30 can swing greatly with respect to the tripod-shaft portions 22 in the torque-transmission-wise view (i.e., Fig. 2). And, this swinging angle becomes greater as the location of the inner rollers 31 with respect to the tripod-shaft portions 22 goes from the root side to the leading-end side.

Meanwhile,thereisa case where the torque-transmission-wise width "ax" of the tripod-shaft portions 22 is held constant entirely over the span from the root side to the leading-end side. In this case, the rollers 30 hardly swing with respect to the tripod-shaft portions 22 in the shaft-axis-wise view (i.e., Fig. 1) even if the inner rollers 31 are present at whatever locations in the tripod-shaft portions 22.

Moreover,thereisa case where the torque-transmission-wise width "ax" of the tripod-shaft portions 22 is formed smaller as it goes from the root side to the leading-end side. In this case, the rollers 30 hardly swing with respect to the tripod-shaped portions 22 in the shaft-axis-wise view (i.e., Fig. 1) if the inner rollers 31 are located at the root of the tripod-shaft portions 22. On the contrary, in a case where the inner rollers 31 are located at the leading end of the tripod-shaft portions 22, the rollers 30 can swing with respect to the tripod-shaft portions 22 in the shaft-axis-wise view (i.e., Fig. 1). And, this swinging angle becomes greater as the location of the inner rollers 31 with respect to the tripod-shaft portions 22 goes from the root side to the leading-end side. Further, the shaft-axis-wise width "b2" at the leading end of the tripod-shaft portions 22 is formed smaller than the torque-transmission-wise width "a2" at the aforesaid leading end. Therefore, in a case where the inner rollers 31 are located at the leading end of the tripod-shaft portions 22, a swingable angle of the rollers 30 in the shaft-axis-wise view (i.e., Fig. 1) becomes smaller than a swingable angle of the rollers 30 in the torque-transmission-wise view (i.e., Fig. 2).

The outer roller 32 comprises a circular cylindrical configuration. An outer peripheral surface of this outer roller 32 comprises a shape that follows or copies that of the guide grooves 11. Therefore, the outer roller 32 engages with respect to each of the guide grooves 11 rollably about the up/down-wise axis (or about the tripod axis) in Fig. 1, respectively. Further, an engager groove 32a is formed on the diametrically outer side (or upper side in Fig. 1), and is formed on the diametrically inner side (or lower side in Fig. 1). And, each of the needles 70 comprises a long and thin circular columnar configuration, and intervenes between the inner roller 31 and the outer roller 32 rollably with respect to the inner roller 31 and outer roller 32.

The snap rings 34, 34 are fitted into the engager grooves 32a, respectively, and are made so as to engage with them in the roller-rotary-axis direction (the up/down direction in Fig. 1) with respect to the inner roller 31 and needles 33. That is, the snap rings 34, 34 operate so that the inner roller 31 and needles 33 do not break away from the inner side of the outer roller 32 in the upward direction and downward direction in Fig. 1.,

Note that, in the aforementioned setting, the inner roller 31 of the rollers 30 is made into a circular cylindrical configuration; however, it is also allowable that the inner peripheral surface or outer peripheral surface of the inner roller 31 can comprise a spherical-surface configuration, or can even be one that has a dent or swelling in the roller-rotary-axis diametric direction (i.e., toward the diametrically outer side or diametrically inner side). Moreover, in the aforementioned setting, even the outer roller 32 is made into a circular cylindrical configuration as well; however, it is also permissible that the inner peripheral surface or outer peripheral surface of the outer roller 32 can comprise a spherical-surface configuration, or can even be one that has a dent or swelling in the roller-rotary-axis diametric direction (i.e., toward the diametrically outer side or diametrically inner side).

Next, the operations of the above-described tripod-shaped constant-velocity universal joint will be explained. First of all, in a case where the joint angle is zero degree, namely, when the intermediate shaft's shaft axis and the outer race's rotary axis coincide with each other, the rollers 30 are located at the root of the tripod-shaft portions 22. On this occasion, it is preferable that the roller-rotary axis of the rollers 30 and the tripod axis of the tripod-shaft portions 22 can coincide with each other in order that the rollers 30 roll smoothly along the guide grooves 11. And, when the rollers 30 are located at the root of the tripod-shaft portions 22, the rollers 30 hardly swing with respect to the tripod-shaft portions 22 so that the roller-rotary axis of the rollers 30 and the tripod axis of the tripod-shaft portions 22 turn into such a state that they virtually coincide with each other. Therefore, in the case where the joint angle is zero degree, the rollers 30 can roll smoothly along the guide grooves 11.

On the other hand, in a case where the joint angle is not zero degree, namely, in a case where the intermediate shaft's shaft axis and the outer race's rotary axis incline to each other, the rollers 30 reciprocate between the root of the tripod-shaft portions 22 and the leading end. And, in the case where the joint angle is not zero degree, and when the rollers 30 are located at the root of the tripod-shaft portions 22, it is preferable that the roller-rotary axis of the rollers 30 and the tripod axis of the tripod-shaft portions 22 can coincide with each other in order that the rollers 30 roll smoothly along the guide grooves 11. And, when the rollers 30 are located at the root of the tripod-shaft portions 22, the rollers 30 hardly swing with respect to the tripod-shaft portions 22 so that the roller-rotary axis of the rollers 30 and the tripod axis of the tripod-shaft portions 22 turn into such a state that they virtually coincide with each other.

Moreover, in the case where the j oint angle is not zero degree, and when the rollers 30 are located at the leading end of the tripod-shaft portions 22, it is preferable that the rollers 30 can incline with respect to the tripod-shaft portions 22 as shown by the chain double-dashed line in Fig. 2 in the torque-transmission-wise view (i.e., Fig. 2) in order that the rollers 30 roll smoothly along the guide grooves 11. And, when the rollers 30 are located at the leading end of the tripod-shaft portions 22, the rollers 30 swing with respect to the tripod-shaft portions 22 so as to move along the guide grooves 11 because it is feasible for the rollers 30 to swing greatly with respect to the tripod-shaft portions 22. Therefore, even in the case where the joint angle is not zero degree, the rollers 30 can roll smoothly along the guide grooves 11.

Next, an experiment was carried out in which induced thrust force was measured if the torque-transmission-wise width "ax" and shaft-axis-wise width "bx" of the tripod-shaft portions 22 were changed. In this experiment, the outer race 10 was supported onto a bearing for detection, the tripod 20 was retained at a predetermined angle with respect to the outer race 10, and then thrust force that occurs in the bearing was measured. That is, this thrust force corresponds to induced thrust force that the tripod-shaped constant-velocity universal joint generates.

As a first experiment, induced thrust force that occurred when the shaft-axis-wise width "bx" was changed in such a state that the torque-transmission-wise width "ax" was fixed. Here, as a condition of the first experiment, the shaft-axis-wise width "bx" was made smaller as it went from the root to the leading-end side. Further, the tripod-axis-wise orthogonal cross-sectional shape of the tripod-shaft portions 22 was adapted into an elliptical shape in which the shaft-axis-wise width "bx" made the major axis or minor axis of the ellipse.

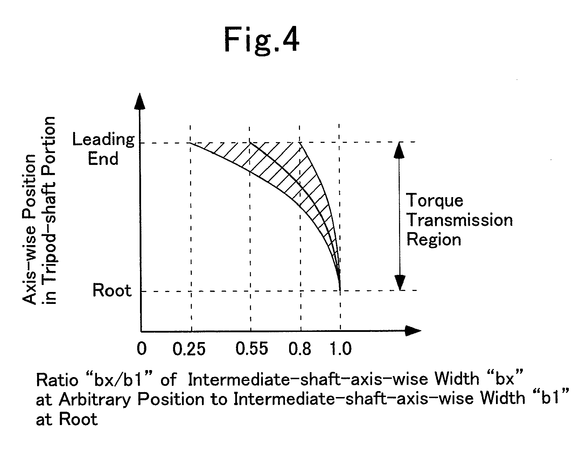

The results of this measurement are illustrated in Fig. 4. Fig. 4 has a horizontal axis that indicates the ratio "bx/b1, " the ratio of the shaft-axis-wise width "bx" at an arbitrary position with respect to the shaft-axis-wise width "b1" at the root, and a vertical axis that indicates any axial position in the tripod-shaft portions 22 from the root to the leading end. And, in Fig. 4, the hatched area is a range where the resulting induced thrust force was a predetermined value or less.

As can be seen from Fig. 4, when taking the shaft-axis-wise width "b1" at the root as 1, the induced thrust force is smaller if the shaft-axis-width "b2" at the leading end falls in a range of 0.25-0.8. Moreover, the induced thrust force is much smaller if the shaft-axis-width "b2" at the leading end falls in a range of 0.45-0.65. And, the induced thrust force becomes the smallest in such a state that the shaft-axis-wise width "b2" at the leading end is 0.55.

Here, the greater the ratio "b2/b1" is, namely, the greater the proportion at the leading end is, the smaller the swinging angle of the rollers 30 becomes when the rollers 30 are located at the leading end of the tripod-shaft portions 22. Accordingly, it is believed that the induced thrust force became greater because the rollers 30 could not roll smoothly within the guide grooves 11.

Note that, when being in the hatched area shown in Fig. 4, any shape is allowable for the tripod-shaped portions 22 as to the shaft-axis-wise width "bx" in the span from the root to the leading end as far as the aforementioned condition is satisfied. Specifically, the route from the root and up to the leading end can be a straight line, or can even be a curve with uniform curvature, or can even be a curve with changing curvature. Note however that, in the shaft-axis-wise width "bx" of the tripod-shaft portions 22 over the span from the root to the leading end, the greater the changing rate of the ratio "bx/b1" becomes as going from the root to the leading end, the smaller the induced thrust force has become.

As a second experiment, induced thrust force that occurred when the torque-transmission-wise width "ax" was changed in such a state that the shaft-axis-wise width "bx" was fixed. Here, as a condition of the second experiment, the torque-transmission-wise width "ax" was made constant entirely over a span from the root to the leading end, or was made smaller as it went from the root to the leading-end side. Further, the tripod-axis-wise orthogonal cross-sectional shape of the tripod-shaft portions 22 was adapted into an elliptical shape in which the torque-transmission-wise width "ax" made the major axis or minor axis of the ellipse.

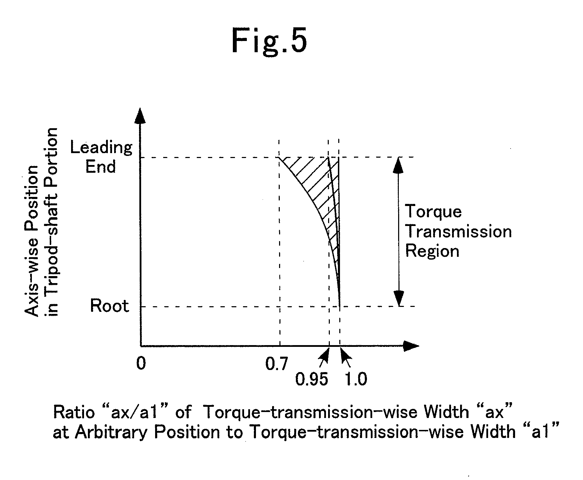

The results of this measurement are illustrated in Fig. 5. Fig. 5 has a horizontal axis that indicates the ratio "ax/al," the ratio of the torque-transmission-wise width "ax" at an arbitrary position with respect to the torque-transmission-wise width "a1" at the root, and a vertical axis that indicates any axial position in the tripod-shaft portions 22 from the root to the leading end. And, in Fig. 5, the hatched area is a range where the resulting induced thrust force was a predetermined value or less.

As can be seen from Fig. 5, when taking the torque-transmission-wise width "a1" at the root as 1, the induced thrust force is smaller if the torque-transmission-wise width "a2" at the leading end falls in a range of 0.7-1.0. Moreover, the induced thrust force is much smaller if the torque-transmission-wise width "a2" at the leading end falls in a range of 0.85-0.98. And, the induced thrust force becomes the smallest in such a state that the shaft-axis-wise width "b2" at the leading end is 0.95.

Here, when the ratio "a2/a1, " namely, the proportion at the leading end, is less than 0.7, the degree of freedom in the swing of the rollers 30 becomes greater in the shaft-axis-wise view if the rollers 30 are located at the leading end of the tripod-shaft portions 22. Accordingly, there is such a fear that the opposite end faces of the rollers 30 might come in contact with the guide grooves 11. It is believed that the induced thrust force became greater because of this contact.

Note that, when being in the hatched area shown in Fig. 5, any shape is allowable for the tripod-shaped portions 22 as to the torque-transmission-wise width "ax" in the span from the root to the leading end as far as the aforementioned condition is satisfied. Specifically, the route from the root and up to the leading end can be a straight line, or can even be a curve with uniform curvature, or can even be a curve with changing curvature. Note however that, in the shaft-axis-wise width "bx" of the tripod-shaft portions 22 over the span from the root to the leading end, the greater the changing rate of the ratio "ax/a1" becomes as going from the root to the leading end, the smaller the induced thrust force has become.

As a third experiment, induced thrust force that occurred when the tripod-axis-wise orthogonal cross-sectional shape of the tripod-shaft portions 22 was adapted into an elliptical shape in which the shaft-axis-wise width "bx" or torque-transmission-wise width "ax" made themaj or axis or minor axis and then the ellipticalness "bx/ax" was changed. Here, as a condition in the third experiment, the shaft-axis-wise width "bx" was made smaller as it went from the root to the leading-end side. Moreover, the torque-transmission-wise width "ax" was made constant entirely over the span from root to the leading end, or was made smaller as it went from the root to the leading-end side. In addition, the ellipticalness "bx/ax" was made smaller as it went from the root to the leading-end side.

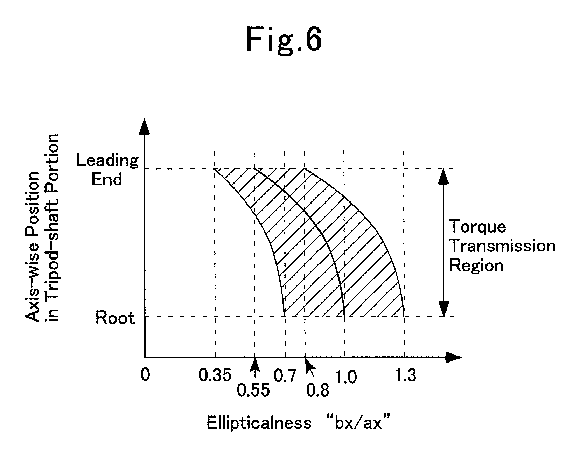

The results of this measurement are illustrated in Fig. 6. Fig. 6 has a horizontal axis that indicates the ellipticalness "bx/ax," and a vertical axis that indicates any axial position in the tripod-shaft portions 22 from the root to the leading end. And, in Fig. 6, the hatched area is a range where the resulting induced thrust force was a predetermined value or less.

As can be seen from Fig. 6, when the ellipticalness "b1/a1" at the root falls in a range of 0.70-1.30 and the ellipticalness "b2/a2" at the leading end falls in a range of 0.35-0.80, the induced thrust force is smaller. Moreover, when the ellipticalness "b1/a1" at the root falls in a range of 0.95-1.05 and the ellipticalness "b2/a2" at the leading end falls in a range of 0.45-0.65, the induced thrust force is much smaller. And, the induced thrust force becomes the smallest in such a state that the ellipticalness "b1/a1" at the root is 1.00 and the ellipticalness "b2/a2" at the leading end is 0.55.

Note that, when being in the hatched area shown in Fig. 6, any shape is allowable for the tripod-shaped portions 22 in the span from the root to the leading end as far as the aforementioned condition is satisfied. Specifically, the route from the root and up to the leading end can be a straight line, or can even be a curve with uniform curvature, or can even be a curve with changing curvature. Note however that, in the span from the root of the tripod-shaft portions 22 to the leading end, the greater the changing rate of the ellipticalness "bx/ax" becomes as going from the root to the leading end, the smaller the induced thrust force has become.

Here, the tripod-shaft portions 22 according to the present embodiment mode exhibit a large section modulus at the root, compared with that at the leading end. Therefore, it is possible to enhance the strength of the tripod-shaft portions 22; as a result, it is possible to intend downsizing tripod-shaped constant-velocity universal joints. In particular, it is possible to make the tripod-axis-wise orthogonal cross-sectional shape at the root into a circle in which the section modulus becomes the maximum.

## Claims

1. A tripod-shaped constant-velocity universal joint being equipped with:
an outer race being formed as a cup configuration whose inner peripheral surface is provided with three guide grooves that extend in the rotary axis direction;
a tripod being equipped with a boss portion being formed as a cylindrical configuration, and three tripod-shaft portions being disposed extendedly from said boss portion to a diametrically outer side of the shaft axis respectively and being inserted into each of said guide grooves; and
rollers being formed as an annular configuration, being supported to each of said tripod-shaft portions rotatably around each of said tripod-shaft portions, and engaging with said guide grooves rollably;
the tripod-shaped constant-velocity universal joint being **characterized in that:**
a shaft-axis-wise width of said tripod-shaft portions is formed smaller as it goes from the root side to the leading-end side in a torque transmission region of said tripod-shaft portions.

2. The tripod-shaped constant-velocity universal joint as set forth in claim 1, wherein a torque-transmission-wise width of said tripod-shaft portions is formed smaller as it goes from the root side to the leading-end side in said torque transmission region when a direction that crosses said shaft axis and the tripod axis of said tripod-shaft portions orthogonally is defined as a torque transmission direction.

3. The tripod-shaped constant-velocity universal joint as set forth in claim 1 or 2, wherein said shaft-axis-wise width at the leading end of said tripod-shaft portions is formed smaller than said torque-transmission-wise width at the leading end of said tripod-shaft portions.

4. The tripod-shaped constant-velocity universal joint as set forth in either of claims 1-3, wherein a ratio of said shaft-axis-wise width at the leading end of said tripod-shaft portions with respect to said shaft-axis-wise width at the root of said tripod-shaft portions is 0.25-0.8 in said torque transmission direction.

5. The tripod-shaped constant-velocity universal joint as set forth in either one of claims 1-4, wherein a ratio of said torque-transmission-wise width at the leading end of said tripod-shaft portions with respect to said torque-transmission-wise width at the root of said tripod-shaft portions is 0.7-1.0 in said torque transmission direction.

6. The tripod-shaped constant-velocity universal joint as set forth in either one of claims 1-5, wherein:
an axially-orthogonal cross-sectional shape of said tripod-shaft portions is formed as an elliptical configuration; and
when the torque-transmission-wise width of said tripod-shaft portions is defined as "a," and the shaft-axis-wise width of said tripod-shaft portions is defined as "b,"
an ellipticalness "b/a" at the root of the tripod-shaft portions is 0.70-1.30; and
another ellipticalness "b/a" at the leading end of the tripod-shaft portions is 0.35-0.80.

7. The tripod-shaped constant-velocity universal joint as set forth in either one of claims 1-6, wherein a shaft-axis-wise width of said tripod-shaft portions is equal to or less than a torque-transmission-wise width of said tripod-shaft portions at an identical tripod-axis-wise position in said torque transmission region.

8. The tripod-shaped constant-velocity universal joint as set forth in either one of claims 1-7, wherein an inner peripheral surface of said rollers is a cylindrical configuration.

9. The tripod-shaped constant-velocity universal joint as set forth in either one of claims 1-8, wherein an axially-orthogonal cross-sectional shape at the root of said tripod-shaft portions is formed as a circle.
